# EUROPEAN PATENT APPLICATION

(11) **EP 4 012 452 A1**
(43) Date of publication of application: **15.06.2022**
(21) Application number: 21211861.6
(22) Date of filing: 02.12.2021
(51) Int. Cl.: G01S 15/931

(54) **METHOD AND SYSTEM FOR DETERMINING POSITION OF OBSTACLE, COMPUTER DEVICE, AND STORAGE MEDIUM**

(30) Priority: 10.12.2020 CN 202011438695
(71) Applicant: Guangzhou Xiaopeng Autopilot Technology Co., Ltd., Guangzhou, Guangdong 510000 (CN)
(72) Inventor: QIN, Han, GUANGZHOU, 510000 (CN); JIANG, Shaofeng, GUANGZHOU, 510000 (CN); CHEN, Shengjun, GUANGZHOU, 510000 (CN); ZHANG, Hong, GUANGZHOU, 510000 (CN); FENG, Kai, GUANGZHOU, 510000 (CN)
(74) Representative: DREISS Patentanwälte PartG mbB

(57) **Abstract**

The present disclosure discloses a method and system for determining a position of an obstacle, a computer device, and a storage medium. The method includes: obtaining, in response to detecting the obstacle in a process of parking, a relative distance between an ultrasonic detection device and the obstacle; determining a maximum beam angle corresponding to the relative distance based on an ultrasonic envelope diagram of the ultrasonic detection device; rotating, with respect to the ultrasonic detection device as an origin, a point on a center axis of the ultrasonic detection device, which is away from the ultrasonic detection device by the relative distance, towards a steering direction of a vehicle to be parked by the maximum beam angle, to determine a position corresponding to the maximum beam angle; and determining, when a spacing between the position corresponding to the maximum beam angle and a sideline of the parking space to park in is smaller than a first distance threshold, that the obstacle is located outside the parking space to park in. In the present disclosure, the detected obstacle can be accurately positioned during the process of parking, such that erroneous detection of obstacles can be prevented, thereby improving parking efficiency and people's use experience.

## Description

### TECHNICAL FIELD

The present disclosure relates to a field of vehicle parking technologies, and more particularly, to a method and system for determining a position of an obstacle, a computer device, and a storage medium.

### BACKGROUND

With the development of the vehicle industry and the improvement of people's living standards, the number of registered vehicles in service in China has been increasing, and thus there are more and more vehicles on highways and streets. However, since the construction speed of standardized parking lots and parking lanes has not kept up with the growth rate of vehicles, the parking lots are becoming increasingly crowded, and there is less and less space for vehicles to move freely when parking. Therefore, how to park a vehicle into an empty parking space in a limited room for movement has become a problem that people will face every time they park and one of current hot topics of general concern. It troubles people's daily travel and life and severely restricts the sustainable development of society.

In order to solve the problem of parking difficulty, in recent years, major vehicle companies and suppliers have increased their research on vehicle-assisted driving technology, which has led to the emergence of many practical new technologies in the field of vehicles. These new technologies have gradually become standard configuration of many vehicles, among which autonomous parking technology is a helpful function for drivers to overcome the difficulty in parking.

At present, the most common autonomous parking technology is based on ultrasonic radar. That is, an ultrasonic radar sensor is used to detect obstacles such as pedestrians, buildings, and vehicles around the body of a vehicle, so as to find an empty parking space enough to accommodate the vehicle and control safe parking of the vehicle. During the process of autonomously parking the vehicle into the empty parking space, the body of the vehicle may move in a direction inclining relative to the parking space. In addition, the ultrasonic radar usually defaults that an obstacle is on a center axis of the ultrasonic detection device when detecting the obstacle. Therefore, if another vehicle exists in a parking space on either side of the empty parking space to park in, and a rotation angle for the vehicle to park into the empty parking space is too large, it is very likely that the other vehicle or another object on either side of the empty parking space to park in may be detected as an obstacle in the empty parking space to park in, resulting in erroneous detection of obstacles, and thus disturbing the autonomous parking.

Therefore, it is an important research topic for those skilled in the art to improve the existing autonomous parking technology so as to overcome the above defects, or to provide a new autonomous parking technology to increase its adaptability to complex application scenarios.

### SUMMARY

Embodiments of the present disclosure disclose a method and system for determining a position of an obstacle, a computer device, and a storage medium, capable of correcting an erroneous detection of an obstacle on either side of a parking space to park in as an obstacle in the parking space to park in, thereby improving adaptability of a parking function in complex application scenarios.

In a first aspect of embodiments of the present disclosure, a method for determining a position of an obstacle is disclosed.

As an optional implementation, in the first aspect of the embodiments of the present disclosure, the method includes: obtaining, in response to detecting the obstacle in a parking path by an ultrasonic detection device in a process of parking in a parking space to park in, a relative distance between the ultrasonic detection device and the obstacle; determining a maximum beam angle corresponding to the relative distance based on an ultrasonic envelope diagram of the ultrasonic detection device; rotating, with respect to the ultrasonic detection device as an origin, a point on a center axis of the ultrasonic detection device, which is away from the ultrasonic detection device by the relative distance, towards a steering direction of a vehicle to be parked by the maximum beam angle, to determine a position corresponding to the maximum beam angle; calculating a spacing between the position corresponding to the maximum beam angle and a sideline of the parking space to park in; and determining whether the spacing is smaller than a first distance threshold, determining, when the spacing is smaller than the first distance threshold, that the obstacle is located outside the parking space to park in, and determining, when the spacing is greater than or equal to the first distance threshold, that the obstacle is located in the parking space to park in.

Further, in the method for determining the position of the obstacle, said obtaining, in response to detecting the obstacle in a parking path by an ultrasonic detection device in a process of parking in a parking space to park in, the relative distance between the ultrasonic detection device and the obstacle includes: determining, in response to detecting the obstacle in the parking path by the ultrasonic detection device in the process of parking in the parking space to park in, whether the vehicle to be parked currently satisfies a predetermined condition; determining, when the predetermined condition is not satisfied, that the obstacle is located in the parking space to park in; and obtaining, when the predetermined condition is satisfied, the relative distance between the ultrasonic detection device and the obstacle.

Further, in the method for determining the position of the obstacle, the predetermined condition includes: a distance between a current position of the vehicle to be parked and a target parking position in the parking path being smaller than a second distance threshold; an included angle between the current position of the vehicle to be parked and the target parking position in the parking path being greater than a first included angle threshold; and the obstacle existing on a side of the parking space to park in towards which the steering direction of the vehicle to be parked is directed.

Further, the method for determining the position of the obstacle further includes, subsequent to said determining that the obstacle is located in the parking space to park in, controlling the vehicle to be parked to stop until it is detected that the obstacle disappears.

In a second aspect of embodiments of the present disclosure, a system for determining a position of an obstacle is disclosed.

As an optional implementation, in the second aspect of the embodiments of the present disclosure, the system includes a first obtaining module, a first determining module, a second determining module, a first calculation module, and a first judging module. The first obtaining module is configured to obtain, in response to detecting the obstacle in a parking path by an ultrasonic detection device in a process of parking in a parking space to park in, a relative distance between the ultrasonic detection device and the obstacle. The first determining module is configured to determine a maximum beam angle corresponding to the relative distance based on an ultrasonic envelope diagram of the ultrasonic detection device. The second determining module is configured to rotate, with respect to the ultrasonic detection device as an origin, a point on a center axis of the ultrasonic detection device, which is away from the ultrasonic detection device by the relative distance, towards a steering direction of a vehicle to be parked by the maximum beam angle, to determine a position corresponding to the maximum beam angle. The first calculation module is configured to calculate a spacing between the position corresponding to the maximum beam angle and a sideline of the parking space to park in. The first judging module is configured to determine whether the spacing is smaller than a first distance threshold, determine, when the spacing is smaller than the first distance threshold, that the obstacle is located outside the parking space to park in, and determine, when the spacing is greater than or equal to the first distance threshold, that the obstacle is located in the parking space to park in.

Further, in the system for determining the position of the obstacle, the first obtaining module is configured to: determine, in response to detecting the obstacle in the parking path by the ultrasonic detection device in the process of parking in the parking space to park in, whether the vehicle to be parked currently satisfies a predetermined condition; determine, when the predetermined condition is not satisfied, that the obstacle is located in the parking space to park in; and obtain, when the predetermined condition is satisfied, the relative distance between the ultrasonic detection device and the obstacle.

Further, in the system for determining the position of the obstacle, the predetermined condition includes: a distance between a current position of the vehicle to be parked and a target parking position in the parking path being smaller than a second distance threshold; an included angle between the current position of the vehicle to be parked and the target parking position in the parking path being greater than a first included angle threshold; and the obstacle existing on a side of the parking space to park in towards which the steering direction of the vehicle to be parked is directed.

Further, the system for determining the position of the obstacle further includes a first control module configured to control, subsequent to determining that the obstacle is located in the parking space to park in, the vehicle to be parked to stop until it is detected that the obstacle disappears.

In a third aspect of embodiments of the present disclosure, a computer device is disclosed.

As an optional implementation, in the third aspect of the embodiments of the present disclosure, the computer device includes a memory and a processor. The memory stores a computer program. The processor, when executing the computer program, performs the method for determining the position of the obstacle as described in any of the above aspects.

In a fourth aspect of embodiments of the present disclosure, a storage medium including computer-executable instructions is disclosed.

As an optional implementation, in the fourth aspect of the embodiments of the present disclosure, the computer-executable instructions, when executed by a computer processor, perform the method for determining the position of the obstacle as described in any of the above aspects.

Compared with the related art, the embodiments of the present disclosure can provide the following advantageous effects.

By accurately positioning the detected obstacle during the process of parking, erroneous detection of obstacles can be prevented, thereby avoiding being unable to park due to the erroneous detection, and improving parking efficiency and people's use experience.

### BRIEF DESCRIPTION OF DRAWINGS

In order to clearly explain technical solutions in the embodiments of the present disclosure or in the related art, drawings used in the description of the embodiments or the related art are briefly described below. Obviously, the drawings as described below are merely some embodiments of the present disclosure. Based on these drawings, other drawings can be obtained by those skilled in the art without creative effort.
FIG. 1 is a flowchart illustrating a method for determining a position of an obstacle according to Embodiment 1 of the present disclosure.
FIG. 2 is a schematic diagram of an ultrasonic envelope diagram according to Embodiment 1 of the present disclosure.
FIG. 3 is a schematic diagram showing a vehicle to be parked being parked in a parking space to park in according to Embodiment 1 of the present disclosure.
FIG. 4 is a flowchart illustrating a method for determining a position of an obstacle according to Embodiment 2 of the present disclosure.
FIG. 5 is a flowchart illustrating a method for determining a position of an obstacle according to Embodiment 3 of the present disclosure.
FIG. 6 is a block diagram showing functional modules of a system for determining a position of an obstacle according to Embodiment 4 of the present disclosure.
FIG. 7 is a schematic diagram showing a structure of a computer device according to Embodiment 5 of the present disclosure.

### DESCRIPTION OF EMBODIMENTS

Technical solutions according to embodiments of the present disclosure will be described clearly and completely below in combination with accompanying drawings of the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art without creative labor shall fall within the protection scope of the present disclosure.

It should be noted that terms "first" and "second" in the specification and claims of the present disclosure are used to distinguish different objects, rather than to describe a specific sequence. Terms "including", "comprising" and "having" and any variations thereof in the embodiments of the present disclosure are intended to cover non-exclusive inclusions. For example, a process, method, system, product, or device that includes a series of steps or units is not necessarily limited to those explicitly listed steps or units, but may also include other steps or units that are not explicitly listed or are inherent to the process, method, product, or device.

The embodiments of the present disclosure disclose a method and system for determining a position of an obstacle, a computer device, and a storage medium, capable of improving accuracy of obstacle detection during parking and people's use experience.

### Embodiment 1

Given that existing autonomous parking technologies have a defect that parking cannot be carried out in case of erroneous detection of obstacles, the inventors actively conduct research and make innovations on a basis of years of rich practical experience and professional knowledge in the automotive industry and in combination with application of academic theories, aiming at developing a feasible autonomous parking technology with more practicability. After continuous research, design, and repeated trials and improvements, a solution disclosed herein, which indeed has practical value, is conceived.

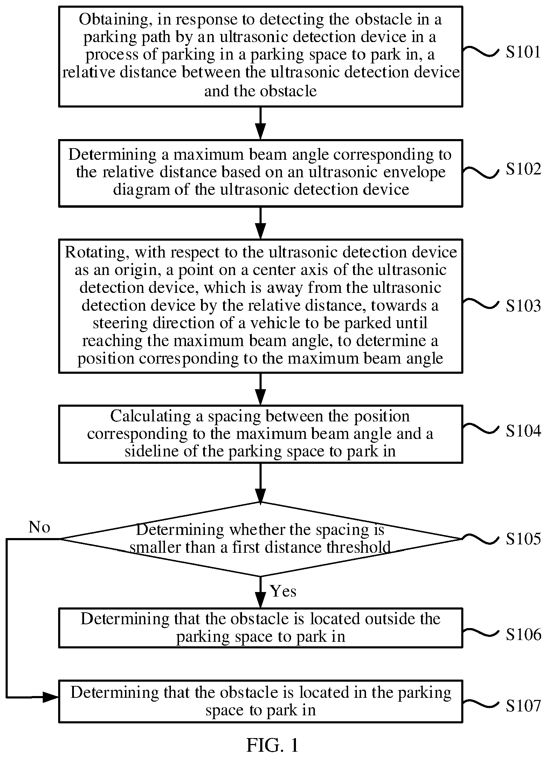

FIG. 1 is a flowchart illustrating a method for determining a position of an obstacle according to Embodiment 1 of the present disclosure. Referring to FIG. 1, the method is applicable to a scenario where an autonomous parking function of a vehicle is activated. The method is performed by a system for determining a position of an obstacle. The system can be implemented by software and/or hardware and integrated inside the vehicle. As illustrated in FIG. 1, the method for determining the position of the obstacle may include the following steps.

In S101, in response to detecting the obstacle in a parking path by an ultrasonic detection device in a process of parking in a parking space to park in, a relative distance between the ultrasonic detection device and the obstacle is obtained.

It should be noted that the ultrasonic detection device may be an ultrasonic sensor, an ultrasonic distance meter, or any other instrument that uses ultrasonic principles for object detection and distance measurement, etc. The embodiment of the present disclosure uses the ultrasonic sensor as an example for description.

The relative distance between the ultrasonic detection device and the obstacle is obtained based on the principle of ultrasonic distance measurement. That is, ultrasonic waves are transmitted in a certain direction by an ultrasonic transmitter, and time counting starts upon the transmission. When propagating in the air, the ultrasonic waves are reflected immediately in response to encountering an obstacle. The time counting stops immediately in response to an ultrasonic receiver receiving the reflected waves, and a distance traveled by the ultrasonic waves, i.e., the relative distance between the ultrasonic detection device and the obstacle, is calculated based on the counted time elapsed during propagation of the ultrasonic waves (i.e., round-trip time).

Assuming that s represents the distance between the obstacle and the ultrasonic detection device, t (in seconds) represents the counted time, and v (in m/s) represents an ultrasonic wave propagation velocity, then a relation among s, t, and v can be expressed as a formula: s=vt/2.

In addition, since an influence of temperature on the ultrasonic wave propagation velocity needs to be taken into consideration in a case of high accuracy requirements, the ultrasonic wave propagation velocity in the above formula needs to be modified to reduce an error, i.e., v=331.4+0.607T.

In the formula, T represents an actual temperature in °C, and v represents a propagation speed of ultrasonic waves in a medium in m/s.

In S102, a maximum beam angle corresponding to the relative distance is determined based on an ultrasonic envelope diagram of the ultrasonic detection device.

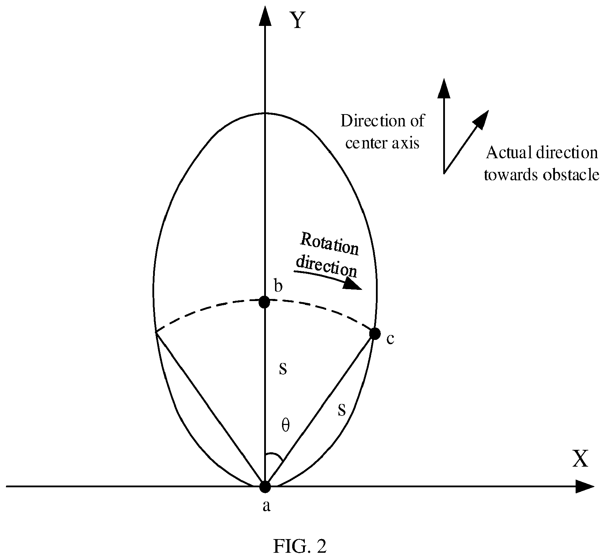

It should be noted that, after the relative distance between the ultrasonic detection device and the obstacle is determined, a possible position range of the obstacle can be obtained based on the ultrasonic envelope diagram of the ultrasonic detection device and the relative distance, since the ultrasonic envelope diagram can be directly learned. Reference may be made to FIG. 2, in which **a** represents a position of the ultrasonic detection device, **b** represents an erroneously detected position of the obstacle (as mentioned above, the ultrasonic radar defaults that the position of the obstacle is on the center axis of the ultrasonic detection device), **c** represents a position closest to a neighboring parking space among possible actual positions where the obstacle may be located (it is generally believed that if the position closest to the neighboring parking space among the possible actual positions is excluded, the remaining possible actual positions are also excluded), and s represents the relative distance between the ultrasonic detection device and the obstacle.

The maximum beam angle θ is determined based on all points in the ultrasonic envelope diagram which are away from **a** by the relative distance s. It should be noted that a point on the edge of the ultrasonic envelope diagram, which is away from **a** by the relative distance s, is theoretically the position closest to the neighboring parking space where the obstacle may be located.

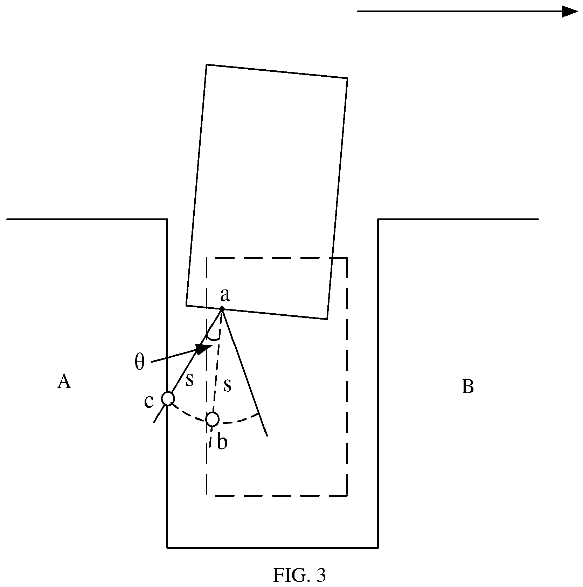

Although it can be seen from FIG. 2 that there may be two points on the edge of the ultrasonic envelope diagram that are away from **a** by the relative distance s, it can be appreciated after contemplation that if the vehicle approaches one side of the parking space during reversal, there is large room on the other side of the parking space. Therefore, in reality, there is only one position closest to the neighboring parking space. For example, referring to FIG. 3 (in which a solid rectangle represents a current position of a vehicle to be parked, and a dotted rectangle represents a target parking position of the vehicle to be parked), when the vehicle to be parked reverses right into a parking space, a left side of the vehicle is close to a sideline of the parking space, or even close to a left parking space A. At this time, a position closest to the neighboring parking space is on the left side of the vehicle, and a right side of the vehicle is farther from the sideline of the parking space, and hence farther from a right parking space B.

In S103, with respect to the ultrasonic detection device as an origin, a point on a center axis of the ultrasonic detection device, which is away from the ultrasonic detection device by the relative distance, is rotated towards a steering direction of a vehicle to be parked until reaching the maximum beam angle, to determine a position corresponding to the maximum beam angle.

It should be noted that, as illustrated in FIG. 2, the point on the center axis (Y axis) of the ultrasonic detection device (at position **a**), which is away from the ultrasonic detection device by the relative distance s, refers to **b,** i.e., an erroneously detected position of the obstacle. When the ultrasonic detection device detects that there is an obstacle and the relative distance to the obstacle is s, the ultrasonic detection device in fact does not know an actual direction in which the obstacle is located, and thus **c** cannot be determined based on the relative distance s alone. Rather, **b** needs to be rotated by an angle which is the maximum beam angle, with **a** as the origin, so as to determine the actual direction in which the obstacle is located and then obtain **c** based additionally on the relative distance s. **c** actually refers to the position corresponding to the maximum beam angle, and is also expressed as the position closest to the neighboring parking space among possible actual positions where the obstacle may be located.

In S104, a spacing between the position corresponding to the maximum beam angle and a sideline of the parking space to park in is calculated.

It should be noted that the spacing between the position corresponding to the maximum beam angle and the sideline of the parking space to park in refers to a distance between the position closest to the neighboring parking space among the possible actual positions where the obstacle may be located and the sideline of the parking space to park in closest to the obstacle, e.g., a distance between c and a sideline closer to the parking space A in FIG. 3.

In S105, it is determined whether the spacing is smaller than a first distance threshold. If yes, step S106 is executed; and if not, step S107 is executed.

It should be noted that the first distance threshold is set by a technician based on experience, and the experience is obtained based on specific experimental results. The first distance threshold can be any suitable value.

In S106, it is determined that the obstacle is located outside the parking space to park in.

In S 107, it is determined that the obstacle is located in the parking space to park in.

It should be noted that when the spacing is smaller than the first distance threshold, it indicates that the vehicle to be parked is very close to the parking space A on the left side, and it is very likely that a vehicle or another object in the parking space A may be detected, resulting in erroneous detection of obstacles. Otherwise, it indicates that the vehicle to be parked is far from the parking space A on the left side, and it is very unlikely to detect the vehicle or another object in the parking space A, which proves that the obstacle can only be located in the parking space to park in.

The embodiment of the present disclosure discloses the method for determining the position of the obstacle. By accurately positioning the detected obstacle during the process of parking, erroneous detection of obstacles can be prevented, thereby avoiding being unable to park due to the erroneous detection, and improving parking efficiency and people's use experience.

### Embodiment 2

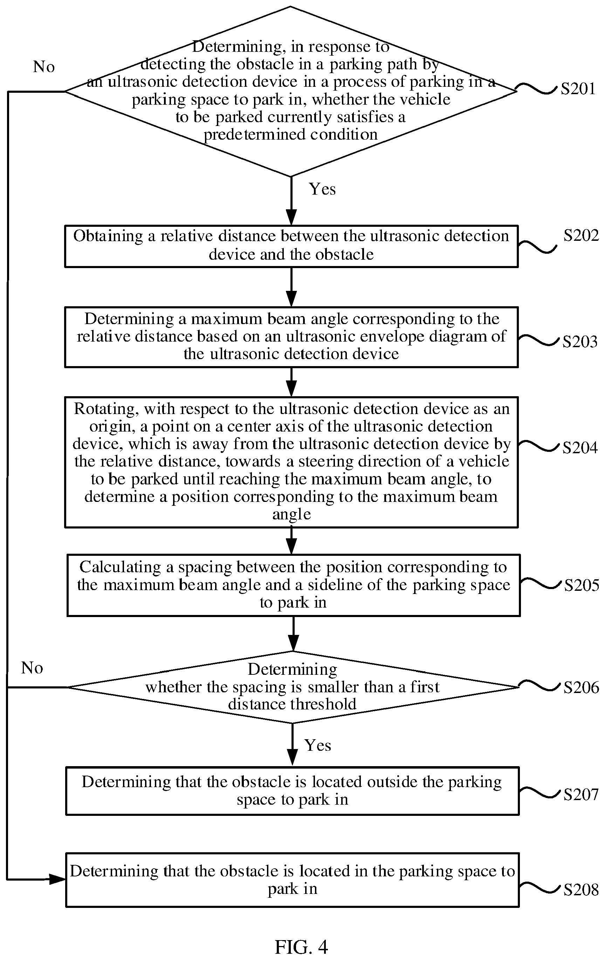

FIG. 4 is a flowchart illustrating a method for determining a position of an obstacle according to Embodiment 2 of the present disclosure. On a basis of Embodiment 1, Embodiment 2 optimizes the step S 101 that "in response to detecting the obstacle in the parking path by the ultrasonic detection device in the process of parking in the parking space to park in, the relative distance between the ultrasonic detection device and the obstacle is obtained". Explanation of terms that are the same as or correspond to those in the above embodiments will not be repeated here.

In response to detecting the obstacle in the parking path by the ultrasonic detection device in the process of parking in the parking space to park in, it is determined whether the vehicle to be parked currently satisfies a predetermined condition.

When the predetermined condition is not satisfied, it is determined that the obstacle is located in the parking space to park in.

When the predetermined condition is satisfied, the relative distance between the ultrasonic detection device and the obstacle is obtained.

Based on the above optimization, as illustrated in FIG. 4, the method for determining the position of the obstacle according to this embodiment may include the following steps.

In S201, in response to detecting the obstacle in the parking path by the ultrasonic detection device in the process of parking in the parking space to park in, it is determined whether the vehicle to be parked currently satisfies a predetermined condition. If not, step S208 is executed; and if yes, step S202 is executed.

The predetermined condition includes: a distance between a current position of the vehicle to be parked and a target parking position in the parking path being smaller than a second distance threshold; an included angle between the current position of the vehicle to be parked and the target parking position in the parking path being greater than a first included angle threshold; and the obstacle existing on a side of the parking space to park in towards which the steering direction of the vehicle to be parked is directed.

It should be noted that a reason for setting the predetermined condition in this embodiment is that when the vehicle to be parked is parallel to the parking space to park in (that is, when the included angle is smaller than or equal to the first included angle threshold), the vehicle to be parked has not yet entered the parking space to park in (that is, the distance is greater than or equal to the second distance threshold), and no obstacle exists on the side of the parking space to park in towards which the steering direction of the vehicle to be parked is directed, it can be directly determined that the detected obstacle must be located in the parking space to park in. Thus, the following process for determining the position of the obstacle can be omitted, which saves processing time and shortens response time.

In the above steps, both the distance between the current position of the vehicle to be parked and the target parking position in the parking path and the included angle between the current position of the vehicle to be parked and the target parking position in the parking path can be obtained easily by using a sensor in the related art and through calculations. In addition, it can be determined in a process of finding a parking space for the vehicle to be parked whether the obstacle existing on the side of the parking space to park in towards which the steering direction of the vehicle to be parked is directed, based on the collection results of the ultrasonic detection device of the vehicle to be parked.

In S202, a relative distance between the ultrasonic detection device and the obstacle is obtained.

In S203, a maximum beam angle corresponding to the relative distance is determined based on an ultrasonic envelope diagram of the ultrasonic detection device.

In S204, with respect to the ultrasonic detection device as an origin, a point on a center axis of the ultrasonic detection device, which is away from the ultrasonic detection device by the relative distance, is rotated towards a steering direction of the vehicle to be parked until reaching the maximum beam angle, to determine a position corresponding to the maximum beam angle.

In S205, a spacing between the position corresponding to the maximum beam angle and a sideline of the parking space to park in is calculated.

In S206, it is determined whether the spacing is smaller than a first distance threshold. If yes, step S207 is executed; and if not, step S208 is executed.

In S207, it is determined that the obstacle is located outside the parking space to park in.

In S208, it is determined that the obstacle is located in the parking space to park in.

According to Embodiment 2 of the present disclosure, the predetermined condition is additionally set under which erroneous obstacle detection is impossible in theory, so that when the vehicle to be parked does not satisfy the predetermined condition, it can be directly determined that the obstacle is located in the parking space to park in, and when the vehicle to be parked meets the predetermined condition, the position of the obstacle is determined normally. In addition to the advantageous effects in Embodiment 1, Embodiment 2 not only shortens the response time, but also further improves the parking efficiency.

### Embodiment 3

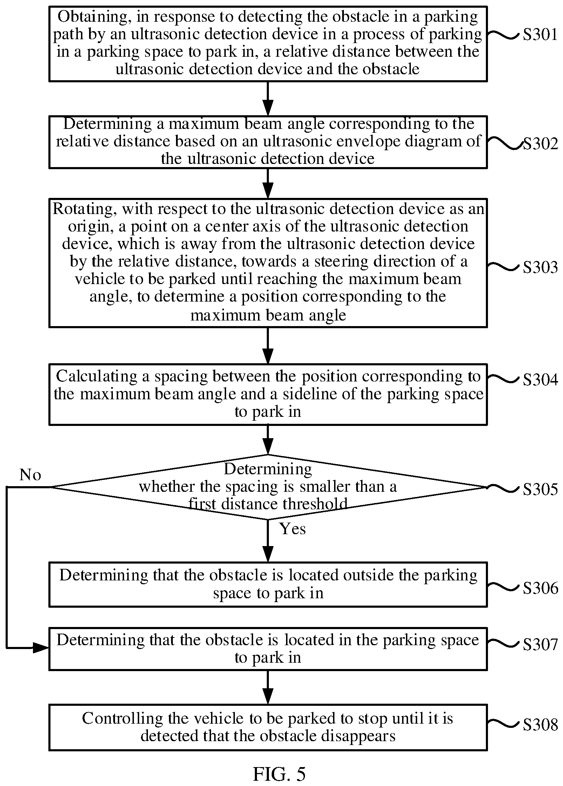

Reference may be now made to FIG. 5, which is a flowchart illustrating a method for determining a position of an obstacle according to Embodiment 3 of the present disclosure. In Embodiment 3, on a basis of the technical solution provided in Embodiment 1, the method is further optimized subsequent to the step S 107 that "it is determined that the obstacle is located in the parking space to park in". Explanation of terms that are the same as or correspond to those in the above embodiments will not be repeated here. Specifically, the method according to Embodiment 3 may further include the following step.

The vehicle to be parked is controlled to stop until it is detected that the obstacle disappears.

Based on the above optimization, as illustrated in FIG. 5, the method for determining the position of the obstacle according to this embodiment may specifically include the following steps.

In S301, in response to detecting the obstacle in a parking path by an ultrasonic detection device in a process of parking in a parking space to park in, a relative distance between the ultrasonic detection device and the obstacle is obtained.

In S302, a maximum beam angle corresponding to the relative distance is determined based on an ultrasonic envelope diagram of the ultrasonic detection device.

In S303, with respect to the ultrasonic detection device as an origin, a point on a center axis of the ultrasonic detection device, which is away from the ultrasonic detection device by the relative distance, is rotated towards a steering direction of a vehicle to be parked until reaching the maximum beam angle, to determine a position corresponding to the maximum beam angle.

In S304, a spacing between the position corresponding to the maximum beam angle and a sideline of the parking space to park in is calculated.

In S305, it is determined whether the spacing is smaller than a first distance threshold. If yes, step S306 is executed; and if not, step S307 is executed.

In S306, it is determined that the obstacle is located outside the parking space to park in.

In S307, it is determined that the obstacle is located in the parking space to park in.

In S308, the vehicle to be parked is controlled to stop until it is detected that the obstacle disappears.

It should be noted that when it is determined that the obstacle is located in the parking space to park in, a parking interruption instruction needs to be issued to control the vehicle to be parked to stop parking. Then, it is continuously detected whether the obstacle disappears. When it is detected that the obstacle disappears, a parking resumption instruction is issued to control the vehicle to be parked to resume a parking action from an interrupted state, and control the vehicle to be parked to continue parking into the parking space to park in.

In addition to the advantageous effects in Embodiment 1, Embodiment 3 of the present disclosure completes an entire autonomous parking process by additionally setting a step that needs to be performed when it is determined that the obstacle is located in the parking space to park in, which improves people's use experience.

### Embodiment 4

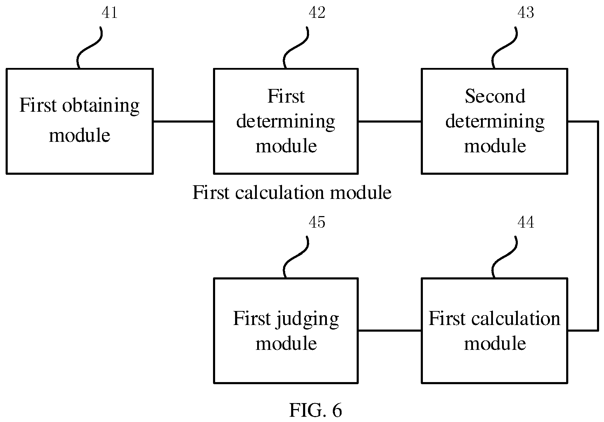

Reference may be now made to FIG. 6, which is a block diagram showing functional modules of a system for determining a position of an obstacle according to Embodiment 4 of the present disclosure. The system is suitable for performing the method for determining the position of the obstacle according to the embodiments of the present disclosure. Specifically, the system includes a first obtaining module 41, a first determining module 42, a second determining module 43, a first calculation module 44, and a first judging module 45.

The first obtaining module 41 is configured to obtain, in response to detecting the obstacle in a parking path by an ultrasonic detection device in a process of parking in a parking space to park in, a relative distance between the ultrasonic detection device and the obstacle.

The first determining module 42 is configured to determine a maximum beam angle corresponding to the relative distance based on an ultrasonic envelope diagram of the ultrasonic detection device.

The second determining module 43 is configured to rotate, with respect to the ultrasonic detection device as an origin, a point on a center axis of the ultrasonic detection device, which is away from the ultrasonic detection device by the relative distance, towards a steering direction of a vehicle to be parked until reaching the maximum beam angle, to determine a position corresponding to the maximum beam angle.

The first calculation module 44 is configured to calculate a spacing between the position corresponding to the maximum beam angle and a sideline of the parking space to park in.

The first judging module 45 is configured to determine whether the spacing is smaller than a first distance threshold, determine, when the spacing is smaller than the first distance threshold, that the obstacle is located outside the parking space to park in, and determine, when the spacing is greater than or equal to the first distance threshold, that the obstacle is located in the parking space to park in.

Optionally, in the system for determining the position of the obstacle, the first obtaining module 41 is specifically configured to: determine, in response to detecting the obstacle in the parking path by the ultrasonic detection device in the process of parking in the parking space to park in, whether the vehicle to be parked currently satisfies a predetermined condition; determine, when the predetermined condition is not satisfied, that the obstacle is located in the parking space to park in; and obtain, when the predetermined condition is satisfied, the relative distance between the ultrasonic detection device and the obstacle.

Optionally, in the system for determining the position of the obstacle, the predetermined condition includes: a distance between a current position of the vehicle to be parked and a target parking position in the parking path being smaller than a second distance threshold; an included angle between the current position of the vehicle to be parked and the target parking position in the parking path being greater than a first included angle threshold; and the obstacle existing on a side of the parking space to park in towards which the steering direction of the vehicle to be parked is directed.

Optionally, the system for determining the position of the obstacle further includes a first control module configured to control, subsequent to determining that the obstacle is located in the parking space to park in, the vehicle to be parked to stop until it is detected that the obstacle disappears.

According to this embodiment of the present disclosure, the system for determining the position of the obstacle is disclosed. By accurately positioning the detected obstacle during the process of parking, erroneous detection of obstacles can be prevented, thereby avoiding being unable to park due to the erroneous detection, and improving parking efficiency and people's use experience.

The above system can perform the method according to any embodiment of the present disclosure, includes corresponding functional modules configured to perform the method, and has advantageous effects.

### Embodiment 5

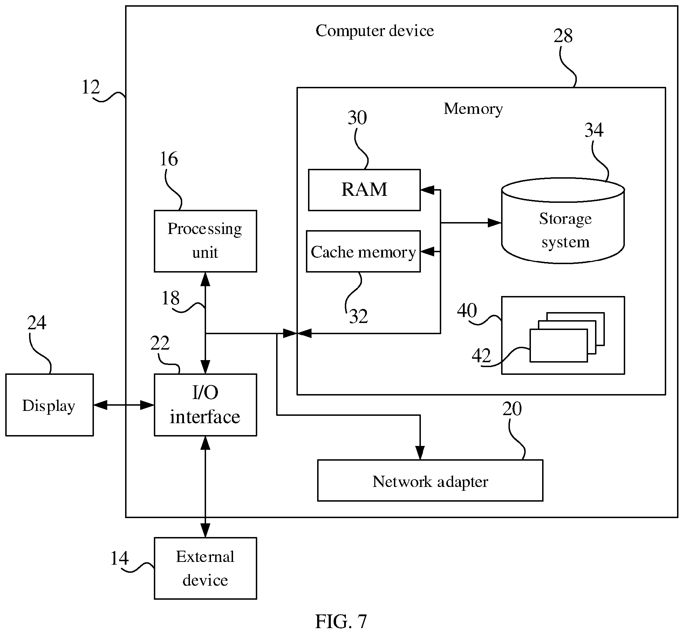

FIG. 7 is a schematic diagram showing a structure of a computer device according to Embodiment 5 of the present disclosure. FIG. 7 is a block diagram showing an example computer device 12 for implementing embodiments of the present disclosure. The computer device 12 illustrated in FIG. 7 is only illustrated as an example, and should not be considered as any restriction on functions and a usage range of the embodiments of the present disclosure.

As illustrated in FIG. 7, the computer device 12 is in the form of a general-purpose computing device. The computer device 12 may include, but is not limited to, one or more processors or processing units 16, a system memory 28, and a bus 18 connecting different system components (including the system memory 28 and the processing unit 16).

The bus 18 represents one or more of several types of bus structures, including a memory bus or memory controller, a peripheral bus, an accelerated graphics port, and a processor or local bus using any of a variety of bus architectures. For example, these architectures include, but are not limited to, an Industry Standard Architecture (ISA) bus, a Micro-Channel Architecture (MCA) bus, an enhanced ISA bus, a Video Electronic Standards Association (VESA) local bus, and a Peripheral Component Interconnect (PCI) bus.

Typically, the computer device 12 may include different kinds of computer system-readable media. These media may be any available media accessible by the computer device 12, including a volatile or non-volatile storage medium and a removable or non-removable storage medium.

The system memory 28 may include a computer system-readable medium in the form of volatile memory, such as a Random Access Memory (RAM) 30 and/or a cache memory 32. The computer device 12 may further include other removable/non-removable storage media and volatile/non-volatile storage media. By way of example only, the storage system 34 may be configured to read and write non-removable, non-volatile magnetic media (not illustrated in FIG. 7, and commonly referred to as "hard disk drives"). Although not illustrated in FIG. 7, a magnetic disk drive for reading and writing removable non-volatile magnetic disks (e.g., "floppy disks"), and an optical disc drive for reading and writing removable non-volatile optical discs (e.g. a Compact Disc-Read Only Memory (CD-ROM), a Digital Video Disc-Read Only Memory (DVD-ROM), or other optical media) can be provided. In these cases, each drive may be connected to the bus 18 via one or more data medium interfaces. The memory 28 may include at least one program product, which has a set of program modules (for example, at least one program module) configured to perform functions of embodiments of the present disclosure.

A program/utility 40 with a set of program modules 42 (at least one program module) may be stored in the memory 28 for example. The program modules 42 may include, but be not limited to, an operating system, one or more applications, other program modules and program data, and any one or combination of the foregoing may include an implementation of a network environment. The program modules 42 are generally configured to implement functions and/or methods described in the embodiments of the present disclosure.

The computer device 12 may also communicate with one or more external devices 14 (e.g., a keyboard, a pointing device, a display 24, etc.), one or more devices that enable a user to interact with the computer device 12, and/or any device (e.g., a network interface controller, a modem, etc.) that enables the computer device 12 to communicate with one or more other computing devices. This kind of communication can be performed via an Input/Output (I/O) interface 22. In addition, the computer device 12 may communicate with one or more networks (such as a Local Area Network (LAN), a Wide Area Network (WAN) and/or a public network such as the Internet) through a network adapter 20. As illustrated in the figure, the network adapter 20 communicates with other modules of the computer device 12 over the bus 18. It should be understood that although not illustrated in FIG. 7, other hardware and/or software modules may be used in combination with the computer device 12, which include, but are not limited to, microcodes, device drivers, redundant processing units, external disk drive arrays, Redundant Arrays of Independent Disks (RAID) systems, tape drives, as well as data backup storage systems and the like.

By running a program stored in the system memory 28, the processing unit 16 can be configured to perform various functional applications and data processing, for example, to perform the method for determining the position of the obstacle according to the embodiments of the present disclosure.

That is, the processing unit, when executing the program, is configured to perform operations including: obtaining, in response to detecting the obstacle in a parking path by an ultrasonic detection device in a process of parking in a parking space to park in, a relative distance between the ultrasonic detection device and the obstacle; determining a maximum beam angle corresponding to the relative distance based on an ultrasonic envelope diagram of the ultrasonic detection device; rotating, with respect to the ultrasonic detection device as an origin, a point on a center axis of the ultrasonic detection device, which is away from the ultrasonic detection device by the relative distance, towards a steering direction of a vehicle to be parked until reaching the maximum beam angle, to determine a position corresponding to the maximum beam angle; calculating a spacing between the position corresponding to the maximum beam angle and a sideline of the parking space to park in; and determining whether the spacing is smaller than a first distance threshold, determining, when the spacing is smaller than the first distance threshold, that the obstacle is located outside the parking space to park in, and determining, when the spacing is greater than or equal to the first distance threshold, that the obstacle is located in the parking space to park in.

### Embodiment 6

Embodiment 6 of the present disclosure provides a computer-readable storage medium having computer executable instructions stored thereon. The computer executable instructions, when executed by a processor, perform the method for determining the position of the obstacle according to the embodiments of the present disclosure.

That is, the processing unit, when executing the program, is configured to perform operations including: obtaining, in response to detecting the obstacle in a parking path by an ultrasonic detection device in a process of parking in a parking space to park in, a relative distance between the ultrasonic detection device and the obstacle; determining a maximum beam angle corresponding to the relative distance based on an ultrasonic envelope diagram of the ultrasonic detection device; rotating, with respect to the ultrasonic detection device as an origin, a point on a center axis of the ultrasonic detection device, which is away from the ultrasonic detection device by the relative distance, towards a steering direction of a vehicle to be parked until reaching the maximum beam angle, to determine a position corresponding to the maximum beam angle; calculating a spacing between the position corresponding to the maximum beam angle and a sideline of the parking space to park in; and determining whether the spacing is smaller than a first distance threshold, determining, when the spacing is smaller than the first distance threshold, that the obstacle is located outside the parking space to park in, and determining, when the spacing is greater than or equal to the first distance threshold, that the obstacle is located in the parking space to park in.

Any combination of one or more computer-readable media can be adopted. The computer-readable medium may be a computer-readable signal medium or a computer-readable storage medium. The computer-readable storage medium may be, but is not limited to, for example, an electrical, magnetic, optical, electromagnetic, infrared, or semiconductor system, apparatus, device or any combination thereof. Specific examples (a non-exhaustive list) of the computer-readable storage media include an electrical connection having one or more wires, a portable computer diskette, a hard disk, an RAM, a ROM, an Erasable Programmable ROM (EPROM) or a flash memory, an optical fiber, a Compact Disc-Read Only Memory (CD-ROM), an optical memory device, a magnetic memory device, or any suitable combination thereof. In the present disclosure, the computer-readable storage medium may be any tangible medium including or storing programs. The programs may be used by or in combination with an instruction execution system, apparatus or device.

The computer-readable signal medium may include a data signal propagating in a baseband or as part of a carrier which carries computer-readable program codes. The data signal propagating in such a manner may be in many forms, including but not limited to, an electromagnetic signal, an optical signal, or any suitable combination thereof. The computer-readable signal medium may also be any computer-readable medium other than the computer-readable storage medium, which may transmit, propagate, or transport programs used by or in combination with an instruction execution system, apparatus or device.

The program codes stored on the computer-readable medium may be transmitted using any appropriate medium, including but not limited to a wireless medium, a wireline, an optical fiber cable, Radio Frequency (RF), or any suitable combination thereof.

Computer program codes for carrying out operations of the present disclosure may be written in one or more programming languages, including an object-oriented programming language, such as Java, Smalltalk, C ++, as well as conventional procedural programming language, such as "C" language or similar programming languages. The program codes may be executed entirely on a user's computer, partly on the user's computer, as a separate software package, partly on the user's computer and partly on a remote computer, or entirely on the remote computer or a remote server. In a case of the remote computer, the remote computer may be connected to the user's computer or an external computer through any kind of network, including an LAN or a WAN (e.g., over the Internet by using an Internet service provider).

It should be noted that, the above is only preferred embodiments and technical principles applied in the present disclosure. Those skilled in the art should understand that, the present disclosure is not limited to the specific embodiments described herein, and various obvious changes, readjustments and alternatives can be made by those skilled in the art without departing from the protection scope of the present disclosure. Therefore, although the present disclosure has been described in detail through the above embodiments, the present disclosure is not limited to the above embodiments, and more other equivalent embodiments may be included without departing from the concept of the present disclosure. The scope of the present disclosure is determined by the scope of the claims as attached.

## Claims

1. A method for determining a position of an obstacle, comprising:
obtaining, in response to detecting the obstacle in a parking path by an ultrasonic detection device in a process of parking in a parking space to park in, a relative distance between the ultrasonic detection device and the obstacle;
determining a maximum beam angle corresponding to the relative distance based on an ultrasonic envelope diagram of the ultrasonic detection device;
rotating, with respect to the ultrasonic detection device as an origin, a point on a center axis of the ultrasonic detection device, which is away from the ultrasonic detection device by the relative distance, towards a steering direction of a vehicle to be parked by the maximum beam angle, to determine a position corresponding to the maximum beam angle;
calculating a spacing between the position corresponding to the maximum beam angle and a sideline of the parking space to park in; and
determining whether the spacing is smaller than a first distance threshold, determining, when the spacing is smaller than the first distance threshold, that the obstacle is located outside the parking space to park in, and determining, when the spacing is greater than or equal to the first distance threshold, that the obstacle is located in the parking space to park in.

2. The method for determining the position of the obstacle according to claim 1, wherein said obtaining, in response to detecting the obstacle in a parking path by an ultrasonic detection device in a process of parking in a parking space to park in, the relative distance between the ultrasonic detection device and the obstacle comprises:
determining, in response to detecting the obstacle in the parking path by the ultrasonic detection device in the process of parking in the parking space to park in, whether the vehicle to be parked currently satisfies a predetermined condition;
determining, when the predetermined condition is not satisfied, that the obstacle is located in the parking space to park in; and
obtaining, when the predetermined condition is satisfied, the relative distance between the ultrasonic detection device and the obstacle.

3. The method for determining the position of the obstacle according to claim 2, wherein the predetermined condition comprises:
a distance between a current position of the vehicle to be parked and a target parking position in the parking path being smaller than a second distance threshold;
an included angle between the current position of the vehicle to be parked and the target parking position in the parking path being greater than a first included angle threshold; and
the obstacle existing on a side of the parking space to park in towards which the steering direction of the vehicle to be parked is directed.

4. The method for determining the position of the obstacle according to claim 1, further comprising, subsequent to said determining that the obstacle is located in the parking space to park in:
controlling the vehicle to be parked to stop until it is detected that the obstacle disappears.

5. A system for determining a position of an obstacle, comprising:
a first obtaining module configured to obtain, in response to detecting the obstacle in a parking path by an ultrasonic detection device in a process of parking in a parking space to park in, a relative distance between the ultrasonic detection device and the obstacle;
a first determining module configured to determine a maximum beam angle corresponding to the relative distance based on an ultrasonic envelope diagram of the ultrasonic detection device;
a second determining module configured to rotate, with respect to the ultrasonic detection device as an origin, a point on a center axis of the ultrasonic detection device, which is away from the ultrasonic detection device by the relative distance, towards a steering direction of a vehicle to be parked by the maximum beam angle, to determine a position corresponding to the maximum beam angle;
a first calculation module configured to calculate a spacing between the position corresponding to the maximum beam angle and a sideline of the parking space to park in; and
a first judging module configured to determine whether the spacing is smaller than a first distance threshold, determine, when the spacing is smaller than the first distance threshold, that the obstacle is located outside the parking space to park in, and determine, when the spacing is greater than or equal to the first distance threshold, that the obstacle is located in the parking space to park in.

6. The system for determining the position of the obstacle according to claim 5, wherein the first obtaining module is configured to:
determine, in response to detecting the obstacle in the parking path by the ultrasonic detection device in the process of parking in the parking space to park in, whether the vehicle to be parked currently satisfies a predetermined condition;
determine, when the predetermined condition is not satisfied, that the obstacle is located in the parking space to park in; and
obtain, when the predetermined condition is satisfied, the relative distance between the ultrasonic detection device and the obstacle.

7. The system for determining the position of the obstacle according to claim 6, wherein the predetermined condition comprises:
a distance between a current position of the vehicle to be parked and a target parking position in the parking path being smaller than a second distance threshold;
an included angle between the current position of the vehicle to be parked and the target parking position in the parking path being greater than a first included angle threshold; and
the obstacle existing on a side of the parking space to park in towards which the steering direction of the vehicle to be parked is directed.

8. The system for determining the position of the obstacle according to claim 5, further comprising:
a first control module configured to control, subsequent to determining that the obstacle is located in the parking space to park in, the vehicle to be parked to stop until it is detected that the obstacle disappears.

9. A computer device, comprising a memory and a processor, wherein the memory has a computer program stored thereon; and the processor, when executing the computer program, performs the method for determining the position of the obstacle according to any one of claims 1 to 4.

10. A storage medium comprising computer-executable instructions, wherein the computer-executable instructions, when executed by a computer processor, perform the method for determining the position of the obstacle according to any one of claims 1 to 4.
